# EUROPÄISCHE PATENTSCHRIFT

(11) **EP 0 849 339 B1**
(45) Veröffentlichungstag und Bekanntmachung des Hinweises auf die Patenterteilung: **03.05.2000**
(21) Anmeldenummer: 97122614.7
(22) Anmeldetag: 22.12.1997
(51) Int. Cl.: C09D 13/00, B43K 19/00

(54) **Wasserlösliche Farbmine oder Farbkreide und Verfahren zu ihrer Herstellung**
Water-soluble coloured lead or coloured chalk and method for preparing the same
Mine de couleur et craie de couleur solubles dans l'eau et son procédé de préparation

(30) Priorität: 21.12.1996 DE 19653926
(43) Veröffentlichungstag der Anmeldung: 24.06.1998
(73) Patentinhaber: A.W. Faber- Castell Unternehmensverwaltung GmbH & Co., D-90547 Stein (DE)
(72) Erfinder: Lugert, Gerhard, Dr., 90431 Nürnberg (DE); Appel, Reiner, 90494 Nürnberg (DE)
(74) Vertreter: Tergau, Enno, Dipl.-Ing.

(56) Entgegenhaltungen:
- DE-A- 3 421 408
- DE-A- 4 230 793
- GB-A- 2 255 318

## Beschreibung

Die Erfindung betrifft eine wasserlösliche Farbmine oder Farbkreide und ein Verfahren zu ihrer Herstellung. Es handelt sich dabei um Minen oder Kreiden, die nach dem Abstreichen auf eine Unterlage aquarellierbar sind. Herkömmliche Farbminen oder Farbkreiden dieser Art - im folgenden wird aus Vereinfachungsgründen nur von Farbminen gesprochen - enthalten deshalb ein mit Wasser anquellbares Bindemittel auf Zellulosederivatbasis, beispielsweise wie Methylhydroxyethylzellulose oder Natrium-Carboxymethylzellulose. Diese Bindemittel werden zusammen mit Farbmitteln und Füllstoffen, gegebenenfalls Wachsen, Fetten oder Emulgatoren mit Wasser vermengt und zu Minen ausgepreßt. In einem weiteren Arbeitsschritt wird das überschüssige Wasser durch Trocknen entfernt. Bei herkömmlichen Minen sind also insgesamt drei Arbeitsschritte notwendig, nämlich das Vermischen und Verkneten der Ausgangsstoffe, das Extrudieren dieser Ausgangsmischung zu Minen und schließlich das Entfernen des Restwassers. Nachteilig ist der zuletzt genannte Verfahrensschritt, da er einen zusätzlichen Fertigungs- und Energieaufwand bedeutet.

Davon ausgehend ist es die Aufgabe der Erfindung, eine Zusammensetzung für eine wasserlösliche Farbmine oder wasserlösliche Farbkreide und ein Herstellungsverfahren vorzuschlagen, bei dem dieser Nachteil umgangen ist.

Diese Aufgabe wird durch eine Farbmine oder Farbkreide nach Anspruch 1 und ein Verfahren nach Anspruch 9 gelöst. Es hat sich gezeigt, daß sich eine Minenausgangsmasse, die neben Füllstoffen, Farbmitteln, gegebenenfalls Gleitmitteln und üblichen Hilfsstoffen 1 bis 30 Gew.% Polyvinylalkohol als Bindemittel und 1 bis 25 Gew.% eines monomeren Polyalkohols oder eines oxyethylierten Phosphorsäureesters als Weichmacher enthält, stabile Minen bzw. Kreiden mit guten Abstricheigenschaften erhalten werden können.

Vorzugsweise werden als Polyalkohole Glyzerin, Glykol, Trimethylolpropan und/oder Triethanolamin eingesetzt. Die Füllstoffe sind vorzugsweise anorganische Füllstoffe aus der Gruppe Kaolin, Talkum. Specksteinmehl, Kalziumkarbonat und Titandioxid. Letzteres dient gleichzeitig als Weißpigment. Zur Beeinflussung der Bindemitteleigenschaften, wie Festigkeit, Wasserlöslichkeit, sind Hilfsstoffe aus der Gruppe Acrylharze, Harnstoff-Formaldehydharze, Melamin-Formaldehydharze, Stärke und Kasein enthalten.

Bei einem erfindungsgemäßen Verfahren werden die Ausgangsstoffe zunächst intensiv gemischt und die so erhaltene Mischung zu Minensträngen extrudiert. Um die fertigen Minen zu erhalten, ist nur noch ein Ablängen der extrudierten Minen bzw. Kreidenstränge erforderlich. Ein zeit- und energieaufwendiger Trockenschritt entfällt. Bei einem bevorzugten Verfahren werden die Ausgangsstoffe bei einer Temperatur von 80 bis 150°C zunächst gemischt und zu einem extrudierbaren Granulat compoundiert. Das so erhaltene Granulat wird dann extrudiert. Bei einer weiteren bevorzugten Verfahrensvariante werden in einem ersten Verfahrensschritt nur der Polyvinylalkohol und der oder die Weichmacher miteinander vermischt und compoundiert. Dem so erhaltenen Granulat werden die übrigen Ausgangsstoffe wie Füllstoffe, Gleitmittel und Farbmittel beigefügt. Die Extrusion der Ausgangsmischung bzw. des Ausgangsgranulats erfolgt vorzugsweise bei einer in Extrusionsrichtung, d. h. zum Extrusionsmundstück des Extruders hin von 220°C auf 150°C fallenden Temperatur. Bei einer solchen Extrusion werden mehrere Temperaturzonen eingehalten, wobei die Temperatur der Zonen zum Extrusionsmundstück hin abfällt.

### Beispiel 1:

| | |
|---|---|
| Polyvinylalkohol (Viskosität 60 mPa s, vollhydrolisierte Type) | 9 Teile |
| Kasein | 1 Teil |
| Trimethylolpropan | 2 Teile |
| Talkum | 10 Teile |
| Kaolin | 40 Teile |
| Polyethylenglykol | 20 Teile |
| Stearinsäure | 5 Teile |
| Grünpigment (C.I. Pigment Green 7) | 5 Teile |

Die Komponenten werden bei 80-140°C im Schnellmischer ca. 30 Minuten lang gemischt. Das erhaltene Granulat wird bei ca. 180°C zu Minen mit einem Durchmesser von 5.0 mm extrudiert.

### Beispiel 2:

| | |
|---|---|
| Polyvinylalkohol (teilhydrolisierte Type, Viskosität ca. 8 mPa s) | 10 Teile |
| Glyzerin | 2 Teile |
| Kaolin | 60 Teile |
| Polyethylenglykol | 20 Teile |
| Gelbpigment (C.I. Pigment Yellow 74) | 10 Teile |

Die Bestandteile werden im Schnellmischer ca. 60 Minuten lang gemischt. Die maximale Temperatur beträgt 140°C. Das gelb eingefärbte Granulat wird extrudiert. Die Temperaturzonen sind dabei abfallend eingestellt (1. Zone 180°C, 2. Zone 175°C, 3. Zone 170°C, 4. Zone 160°C). Die Düse bzw. das Extrusionsmundstück des Extruders (= Matrize) wird auf ca. 150°C geheizt. Es werden Minen mit einem Durchmesser von 3,0 mm und Kreiden mit einem Durchmesser von 7,0 mm extrudiert.

### Beispiel 3:

| | |
|---|---|
| Polyvinylalkohol (teilhydrolisierte Type, Viskosität ca. 3 mPa s) | 10 Teile |
| Diethylenglykol | 3 Teile |
| Titandioxid | 5 Teile |
| Kaolin | 50 Teile |
| Specksteinmehl | 10 Teile |
| Blaupigment (C. I. Pigment Blue 15:1) | 10 Teile |

Die Roh- bzw. Ausgangsstoffe werden in einem Mischextruder bei 130 - 140°C gemischt und compoundiert. Die Extrusion von Minen mit einem Durchmesser von 2,8 - 4,0 mm wird bei einer Extruderheizzonentemperatur vom Mischelement zur Extrusionsdüse (Matrize) von etwa 220°C auf 150°C abfallend extrudiert. Verwendet wird dabei ein Entgasungsextruder.

## Patentansprüche

1. Farbmine oder Farbkreide mit einer Füllstoffe und Pigmente enthaltenden Grundmasse,
dadurch gekennzeichnet,
daß sie 1 bis 30 Gew.% Polyvinylalkohol als Bindemittel und 1 bis 25 Gew.% eines monomeren Polyalkohols und/oder eines oxyethylierten Phosphorsäureesters als Weichmacher enthält.

2. Farbmine oder Farbkreide nach Anspruch 1,
dadurch gekennzeichnet,
daß der monomere Polyalkohol ausgewählt ist aus der Gruppe Glyzerin, Glykol, Trimethylolpropan und Triethandlamin.

3. Farbmine oder Farbkreide nach Anspruch 1 oder 2,
dadurch gekennzeichnet,
daß wenigstens ein Gleitmittel enthalten ist.

4. Farbmine oder Farbkreide nach Anspruch 3,
gekennzeichnet durch folgende Zusammensetzung (Gew.%):
| | |
|---|---|
| Polyvinylalkohol | 1 bis 30 % |
| monomerer Polyalkohol und/oder oxyethylierter Polyphosphorsäureester | 1 bis 25 % |
| Füllstoffe | 10 bis 75% |
| Gleitmittel | 1 bis 25 % |
| Farbmittel | 2 bis 20 % |
| Hilfsstoffe | 0,5 bis 5 % |

5. Farbmine oder Farbkreide nach Anspruch 4,
gekennzeichnet durch
einen Gehalt an Polyvinylalkohol von 5 bis 15 Gew.%.

6. Farbmine oder Farbkreide nach Anspruch 4 oder 5,
dadurch gekennzeichnet,
daß als Hilfsstoff wenigstens ein das Bindemittel modifizierender Stoff aus der Gruppe Acrylharze, Harnstoff-Formaldehydharze, Melamin-Formaldehydharze, Stärke und Kasein zugesetzt ist.

7. Farbmine oder Farbkreide nach einem der Anprüche 4 bis 6,
dadurch gekennzeichnet,
daß als Füllstoffe anorganische Füllstoffe enthalten sind.

8. Farbmine oder Farbkreide nach Anspruch 7,
gekennzeichnet durch
einen Füllstoff aus der Gruppe Kaolin, Talkum, Specksteinmehl, Kalziumkarbonat und Titandioxid.

9. Verfahren zum Herstellen einer Farbmine oder einer Farbkreide nach einem der Ansprüche 1 bis 8, mit den folgenden Verfahrensschritten:
a) Mischen der Ausgangsstoffe,
b) Extrusion der so erhaltenen Mischung zu Minen bzw. Kreidensträngen und
c) Ablängen der Stränge zu fertigen Minen.

10. Verfahren nach Anpruch 9,
dadurch gekennzeichnet,
daß die Ausgangsstoffe in Verfahrensschritt a) bei einer Temperatur von 80 bis 150°C zu einem extrudierbaren Granulat compoundiert werden.

11. Verfahren nach Anspruch 10,
dadurch gekennzeichnet,
daß im Verfahrensschritt a) nur der Polyvinylalkohol und der oder die Weichmacher gemischt und compoundiert werden und daß danach dieser Mischung die übrigen Ausgangsstoffe, wie Füllstoffe, Gleitmittel und Farbmittel beigefügt werden.

12. Verfahren nach einem der Ansprüche 9 bis 11,
dadurch gekennzeichnet,
daß die Mischung der Ausgangsstoffe bzw. das Granulat bei einer in Extrusionsrichtung von 220°C auf 150°C am Extrusionsmundstück fallenden Temperatur extrudiert wird.

13. Verfahren nach einem der Ansprüche 9 bis 12,
dadurch gekennzeichnet,
daß zur Extrusion ein Entgasungsextruder verwendet wird.

14. Verfahren nach einem der Ansprüche 9 bis 12,
dadurch gekennzeichnet,
daß das Vermischen der Ausgangsstoffe und das Extrudieren in einem Mischungsextruder mit Entgasungseinrichtung erfolgen.

## Claims

1. Coloured pencil lead or coloured chalk having a base composition comprising fillers and pigments, characterized in that it contains from 1 to 30% by weight of polyvinyl alcohol as binder and from 1 to 25% by weight of a monomeric polyalcohol and/or of an ethoxylated phosphoric ester as plasticizer.

2. Coloured pencil lead or coloured chalk according to Claim 1, characterized in that the monomeric polyalcohol is selected from the group consisting of glycerol, glycol, trimethylolpropane and triethanolamine.

3. Coloured pencil lead or coloured chalk according to Claim 1 or 2, characterized in that it comprises at least one lubricant.

4. Coloured pencil lead or coloured chalk according to Claim 3, characterized by the following composition (% by weight):
| | |
|---|---|
| polyvinyl alcohol | from 1 to 30% |
| monomeric polyalcohol and/or ethoxylated polyphosphoric ester | from 1 to 25% |
| fillers | from 10 to 75% |
| lubricant(s) | from 1 to 25% |
| colorant(s) | from 2 to 20% |
| auxiliaries | from 0.5 to 5%. |

5. Coloured pencil lead or coloured chalk according to Claim 4, characterized by a polyvinyl alcohol content of from 5 to 15% by weight.

6. Coloured pencil lead or coloured chalk according to claim 4 or 5, characterized in that at least one binder-modifying substance from the group consisting of acrylic resins, urea-formaldehyde resins, melamine-formaldehyde resins, starch and casein is added as an auxiliary.

7. Coloured pencil lead or coloured chalk according to one of Claims 4 to 6, characterized in that the fillers comprise inorganic fillers.

8. Coloured pencil lead or coloured chalk according to Claim 7, characterized by a filler from the group consisting of kaolin, talc, finely ground soapstone, calcium carbonate and titanium dioxide.

9. Method of producing a coloured pencil lead or a coloured chalk according to one of Claims 1 to 8, comprising the following steps:
a) mixing the starting materials,
b) extruding the resultant mixture to give pencil leads or chalk strands and
c) cutting the strands to length to give finished leads.

10. Method according to Claim 9, characterized in that the starting materials in step a) are compounded at a temperature of from 80 to 150°C to give extrudable granules.

11. Method according to Claim 10, characterized in that in step a) only the polyvinyl alcohol and the plasticizer or plasticizers are mixed and compounded and in that subsequently the remaining starting materials, such as fillers, lubricant(s) and colorant(s), are added to this mixture.

12. Method according to one of Claims 9 to 11, characterized in that the mixture of the starting materials, or the granules, are extruded at a temperature which falls, in the direction of extrusion, from 220°C to 150°C at the extrusion orifice.

13. Method according to one of Claims 9 to 12, characterized in that a devolatilizing extruder is used for the extrusion.

14. Method according to one of Claims 9 to 12, characterized in that the mixing of the starting materials and the extrusion take place in a mixture extruder having a devolatilizing unit.

## Revendications

1. Mine de couleur ou craie de couleur présentant une masse de base contenant des charges et des pigments, caractérisée en ce qu'elle contient de 1 à 30% en poids de poly(alcool vinylique) comme liant et de 1 à 25% en poids d'un polyalcool monomère et/ou d'un ester d'acide phosphorique oxyéthylé comme plastifiant.

2. Mine de couleur ou craie de couleur selon la revendication 1, caractérisée en ce que le polyalcool monomère est choisi parmi la glycérine, le glycol, le triméthylolpropane et la triéthanolamine.

3. Mine de couleur ou craie de couleur selon la revendication 1 ou 2, caractérisée en ce qu'il est contenu au moins un lubrifiant.

4. Mine de couleur ou craie de couleur selon la revendication 3, caractérisée par la composition suivante (% en poids) :
| | |
|---|---|
| poly(alcool vinylique) | 1 à 30% |
| polyalcool monomère et/ou ester de poly(acide phosphorique) oxyéthylé | 1 à 25% |
| charges | 10 à 75% |
| lubrifiant | 1 à 25% |
| colorant | 2 à 20% |
| auxilaires | 0,5 à 5% |

5. Mine de couleur ou craie de couleur selon la revendication 4, caractérisée par une teneur en poly(alcool vinylique) de 5 à 15% en poids.

6. Mine de couleur ou craie de couleur selon la revendication 4 ou 5, caractérisée en ce qu'il est ajouté comme auxiliaire au moins une matière modifiant le liant choisie parmi des résines acryliques, des résines d'urée-formaldéhyde, des résines de mélamine-formaldéhyde, l'amidon et la caséine.

7. Mine de couleur ou craie de couleur selon l'une quelconque des revendications 4 à 6, caractérisée en ce que sont contenues comme charges des charges inorganiques.

8. Mine de couleur ou craie de couleur selon la revendication 7, caractérisée par une charge choisie parmi le kaolin, la stéatite, la farine de craie de Briançon, le carbonate de calcium et le dioxyde de titane.

9. Procédé pour la préparation d'une mine de couleur ou d'une craie de couleur selon l'une quelconque des revendications 1 à 8, présentant les étapes suivantes de procédé:
a) mélange des matières premières,
b) extrusion du mélange ainsi obtenu en mines respectivement en barres de craies et
c) mise à la longueur des barres en mines terminées.

10. Procédé selon la revendication 9, caractérisé en ce que les matières premières sont combinées dans l'étape de procédé a) à une température de 80 à 150°C en granulés extrudables.

11. Procédé selon la revendication 10, caractérisé en ce que dans l'étape de procédé a) seuls le poly(alcool vinylique) et le ou les plastifiants sont mélangés et combinés et en ce que les autres matières premières, comme les charges, le lubrifiant et le colorant, sont ajoutées après cela à ce mélange.

12. Procédé selon l'une quelconque des revendications 9 à 11, caractérisé en ce que le mélange des matières premières respectivement les granulés sont extrudés à une température chutant dans la direction de l'extrusion de 220°C à 150°C à la filière d'extrusion.

13. Procédé selon l'une quelconque des revendications 9 à 12, caractérisé en ce que l'on utilise pour l'extrusion un dispositif d'extrusion à dégazage.

14. Procédé selon l'une quelconque des revendications 9 à 12, caractérisé en ce que le mélange des matières premières et l'extrusion se font dans une extrudeuse de mélange avec un dispositif de dégazage.
